**Europäisches Patentamt**

**European Patent Office**

**Office européen des brevets**

(19)

(11) Veröffentlichungsnummer: **0 131 828**

**B1**

# (12) EUROPÄISCHE PATENTSCHRIFT

(45) Veröffentlichungstag der Patentschrift:
29.04.87

(51) Int. Cl.⁴: **H 04 B 5/00**

(21) Anmeldenummer: **84107602.9**

(22) Anmeldetag: **30.06.84**

(54) Funkübertragungsanlage zur Übermittlung von lokalen Informationen.

(30) Priorität: **08.07.83 DE 3324610**

(43) Veröffentlichungstag der Anmeldung:
**23.01.85 Patentblatt 85/4**

(45) Bekanntmachung des Hinweises auf die Patenterteilung:
**29.04.87 Patentblatt 87/18**

(84) Benannte Vertragsstaaten:
**AT CH DE FR GB LI**

(56) Entgegenhaltungen:
**EP-A-0 004 003**
**DE-A-2 402 600**
**DE-B-2 164 335**

**WIRELESS WORLD, Band 88, Nr. 1558, Juli 1982,**
**Seiten 33-37, Olchester, GB; D.J.R. MARTIN:**
**"Leaky feeder communication in tunnels"**
**PATENTS ABSTRACTS OF JAPAN, Band 2, Nr. 79,**
**23. Juni 1978, Seite 3204 E 78; & JP - A - 53 43 412**
**(FUJIKURA DENSEN K.K.) 19.04.1978**

(73) Patentinhaber: **Licentia Patent- Verwaltungs- GmbH,**
**Theodor- Stern- Kai 1, D-6000 Frankfurt/Main 70**
**(DE)**

(72) Erfinder: **Burwick, Karl, Dipl.- Ing., Wutzkyallee 50,**
**D-1000 Berlin 47 (DE)**
Erfinder: **Wysocki, Bodo, Dipl.- Ing., Speerweg**
**33a, D-1000 Berlin 28 (DE)**

(74) Vertreter: **Schulze, Harald Rudolf, Dipl.- Ing.,**
**Licentia Patent- Verwaltungs- GmbH Theodor-**
**Stern- Kai 1, D-6000 Frankfurt/Main 70 (DE)**

## Beschreibung

Die Erfindung betrifft eine Funkübertragungsanlage gemäß dem Oberbegriff des Anspruchs 1.

Aus der DE-B-21 64 335 ist ein Fernmeldesystem begrenzter Reichweite für den Nachrichtenverkehr zwischen einer ortsfesten Station, die einen Sende- und Empfangsteil enthält, und mehreren in einer begrenzten Zone befindlichen beweglichen Stationen, die jeweils mit einem Empfänger ausgerüstet sind, bekannt. Die Sendeantenne der ortsfesten Station ist in Form einer durch eine längs der begrenzten Zone verlegten, mit dem Sendeteil und dem Empfängerteil der ortsfesten Station gekoppelten Übertragungsleitung ausgebildet.

Die Übertragungsleitung ist ein schwach streuendes Koaxialkabel, dessen Innen- und Außenleiter an einem Ende an einen modulierte Hochfrequenzschwingungen erzeugenden Sender der ortsfesten Station angekoppelt und am anderen Ende reflexionsfrei abgeschlossen sind. Nachteilig an dieser Anordnung ist, daß dieser reflexionsfreie Abschluß des Koaxialkabels durch einen die restliche Hochfrequenzenergie am Ende des Kabels vernichtenden ohmschen Widerstand gebildet wird, so daß in dieser Ausbildungsform eine Abstrahlung der elektromagnetischen Wellen in Längsrichtung der Kabelstrecke weit über die Kabelenden hinaus in den benachbarten Raum auftritt. Dies führt im Grenzbereich zweier benachbarter Leckkabelabschnitte deshalb zu einer großen Ausdehnung des Verwirrungsgebietes.

Weiterhin ist aus der EP-A-0 004 003 ein Nachrichtenübertragungssystem zur linienförmigen Funkversorgung z. B. in einem Eisenbahntunnel bekannt, das für den Funkkontakt einerseits zwischen Systemteilnehmern, die sich in einem Funkabschattungsgebiet (z. B. in einem Tunnel) befinden und mit weiteren im Abschattungsgebiet befindlichen Systemteilnehmern mit Hilfe eines passiven Leckkabel-Antennensystems Nachrichten austauschen können, und andererseits mit Systemteilnehmern, die sich außerhalb der Reichweite des Leckkabel-Antennensystems in einem funktechnisch nicht abgeschatteten Gebiet (z. B. außerhalb eines Tunnels) befinden, in diesem Gebiet zumindest eine Freiraumantenne (Außenantenne) einzusetzen und diese Antenne an das Leckkabel-Antennensystem anzuschließen.

Bei der Funkversorgung eines Gebietes mit mehreren im gleichen Kanal arbeitenden Sendern, die unterschiedliche lokale Informationen längs eines Streckenabschnittes abstrahlen, treten Störungen in Empfangsorten auf, in denen die Feldstärken beider Senden fast die gleiche Größe haben. Ein ungestörter Empfang der aktuellen lokalen Information z. B. für fahrende Autobahnverkehrsteilnehmer ist deshalb dort nicht möglich.

Der Erfindung liegt die Aufgabe zugrunde, die Größe der Verwirrungsgebiete einer gattungsgemäßen Funkübertragungsanlage innerhalb zweier oder mehrerer benachbarter Teilstreckenabschnitte in einer begrenzten Zone längs eines Streckenabschnittes kostengünstig zu minimalisieren.

Diese Aufgabe wird durch die kennzeichnenden Merkmale des Anspruchs 1 in vorteilhafter Weise gelöst.

Weitere vorteilhafte Ausgestaltungen und Weiterbildungen der Erfindung sind in den Unteransprüchen angegeben.

Ein Ausführungsbeispiel der Erfindung ist in der Zeichnung dargestellt und wird im folgenden näher beschrieben:

FIG. 1 zeigt den prinzipiellen Aufbau einer Funktionseinheit einer Funkübertragungsanlage innerhalb eines Teilstreckenabschnittes

FIG. 2 zeigt einen Ausschnitt einer Funkübertragungsanlage innerhalb eines Streckenabschnittes mit zwei Teilstreckenabschnitten.

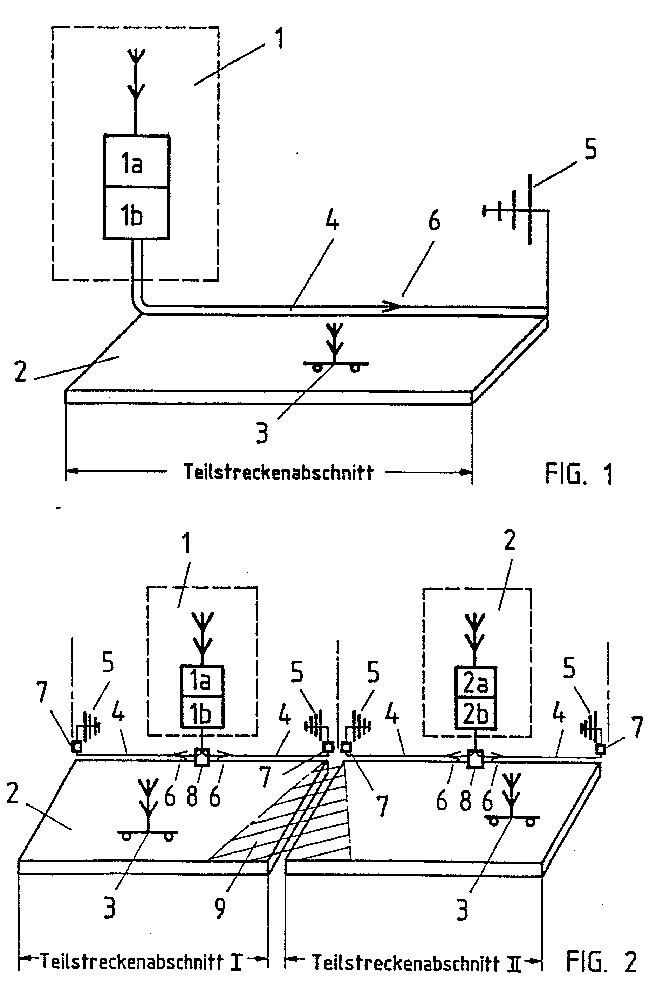

In FIG. 1 ist eine Funktionseinheit einer Funkübertragungsanlage innerhalb eines Teilstreckenabschnittes dargestellt.

Die Empfangseinheit 1a empfängt, z. B. von einer Verkehrsfunkstelle, lokale Informationen, die über die Sendeeinheit 1b direkt in das am Sendeausgang angeschlossene Leckkabel 4 eingespeist werden. Das Leckkabel sowie die am Leckkabelende angeschlossene Richtantenne 5 strahlen die aktuellen Informationen an die Umgebung, insbesondere in die im Teilstreckenabschnitt I zu versorgende Zone 2 ab. Die für den Durchtritt der elektromagnetischen Felder im Leckkabel angebrachten Öffnungen sind in ihrer geometrischen Form entsprechend der Ausbreitungsvorzugsrichtung der elektromagnetischen Wellen so gewählt, daß eine optimale Informationsübermittlung zwischen der ortsfesten Station 1 und den beweglichen Stationen 3 innerhalb der begrenzten Zone 2 gewährleistet ist.

Durch den Anschluß einer oder mehrerer Richtantennen am Leckkabelende wird auch die restliche Hochfrequenzenergie am Kabelende zum Aufbau des Funkfeldes innerhalb der begrenzten Zone ausgenutzt.

Um ein besonders geringes Verwirrungsgebiet am Kabelende zu gewährleisten, auch wenn ein benachbarter Teilstreckenabschnitt mit einer anderen lokalen Information auf derselben Trägerfrequenz versorgt wird, ist die Hauptstrahlrichtung der Antenne 5 entgegengesetzt zur Richtung des im Leckkabel 6 übermittelten Signals gewählt.

Gemäß einer Weiterbildung der Erfindung ist die Antenne 5 derart dimensioniert, daß sie in ihrem Nahfeld ein die lokale Information enthaltendes Funkfeld aufbaut, dessen Feldstärke größer ist als das vom Leckkabel im selben Bereich des Leckkabelendes aufgebaute Funkfeld.

In FIG. 2 ist eine Anordnung einer Funkübertragungsanlage zur Übermittlung von lokalen Informationen innerhalb eines Streckenabschnittes, insbesondere im Bereich von Autobahnen, in dem zwei benachbarte Teilstreckenabschnitte I und II mit unterschiedlichen Informationen mittels gleicher Trägerfrequenz versorgt werden, dargestellt.

Die Anordnung enthält je zwei Leckkabelhälften in den Teilstreckenabschnitten I und II und jeder Teilstreckenabschnitt (I bzw. II) enthält eine Empfangs-Sendeeinheit (1a, 1b bzw. 2a, 2b), die die lokale Information oder auch Rundfunksendungen empfängt und diese Informationen über einen 3 dB-Koppler (8) an den einen Enden zweier Koaxialkabelhälften einspeist. Ein Teil der gesamten eingespeisten Signalleistung erzeugt längs der jeweiligen Kabelhälften ein HF-Streufeld, das an die Umgebung abgestahlt wird. Die restliche HF-Leistung an den Kabelenden wird über das Dämpfungsglied 7 einer Antenne 5 zugeführt, deren Hauptstrahlrichtung entgegengesetzt zur Signalrichtung ist.

Die von den Richtantennen im Bereich der Kabelenden erzeugte Feldstärke liegt wesentlich über der von den Leckkabeln verursachten, so daß im Antennennahfeldbereich im wesentlichen die Antennen den Informationsübermittler darstellen, während im Fernfeldbereich die strahlenden Leckkabel den Informationsübermittler darstellen. Die Ausdehnung bzw. Größe des Verwirrungsgebietes 9 wird dadurch sehr klein und wird praktisch nur durch die Richtcharakteristika und den Abstand zweier benachbarter Antennen in verschiedenen Teilstreckenabschnitten bestimmt.

Mit dem der Antenne 5 vorgeschalteten Dämpfungsglied 7 läßt sich die Reichweite sowie die Größe des Bereiches, in der die Antenne das Funkfeld im wesentlichen bestimmt, variieren; die Dämpfung kann je nach den örtlichen Gegebenheiten auch zu Null gewählt sein, so daß am Kabelende die gesamte restliche von der Sendeeinheit gelieferte Energie über die Antenne abgestrahlt wird.

Durch unerwünschte Reflexionen der Umgebung wird die ideale Ausbreitung zwar gestört, aber durch Anpassung der Leckkabellage längs des Teilstreckenabschnittes, des Antennenortes, der Abstrahlcharakteristika von Kabel und Antennen längs des Streckenabschnittes sowie durch entsprechende Dimensionierung des Dämpfungsgliedes an das umgebungsspezifische Ausbreitungsverhalten der elektromagnetischen Wellen läßt sich das Verwirrungsgebiet zweier benachbarter Teilstreckenabschnitte minimalisieren. Hierbei ist es häufig zweckmäßig, die Antenne in Form einer Yagi-Antenne auszubilden, die vertikal polarisierte Wellen abstrahlt.

Bei der Grundausführung der Erfindung mit mehreren Teilstreckenabschnitten ist in benachbarten Teilstreckenabschnitten innerhalb eines Streckenabschnittes die Reihenfolge der Anordnung von Empfangs-/Sendeeinheit, sendeseitiger Anschluß des Leckkabels und am Leckkabelende angeschlossene Antenne längs der Teilstreckenabschnitte gleich. Vorteilhafter ist es häufig, die Reihenfolge der Anordnung in den benachbarten Teilstreckenabschnitten invers zueinander zu wählen, so daß die Richtung des im Leckkabel übermittelten Signals in einem Teilstreckenabschnitt entgegengesetzt verläuft zur Signalrichtung im benachbarten Teilstreckenabschnitt.

Gelegentlich erfordert der Umgebungsraum die Verwendung eines Ausführungsbeispiels der Erfindung, bei dem ein Leckkabelende eines Teilstreckenabschnittes anstelle einer Antenne mittels eines ohmschen Widerstandes abgeschlossen und im benachbarten Teilstreckenabschnitt das benachbarte Leckkabelende mit einer Antenne abgeschlossen ist.

Eine weitere Ausführungsform der Erfindung ist dadurch gekennzeichnet, daß am sendeseitigen Ausgang der Empfangs-/Sendeeinheit mehrere Leckkabel verschiedener Teilstreckenabschnitte und verschiedener sich kreuzender Streckenabschnitte angeschlossen sind.

**Patentansprüche**

1. Funkübertragungsanlage zur Übermittlung von gleichen oder unterschiedlichen lokalen Informationen auf gleicher oder annähernd gleicher Trägerfrequenz pro Informationskanal innerhalb eines aus mehreren Teilstreckenabschnitten bestehenden Streckenabschnittes zwischen einer jeweils in einem Teilstreckenabschnitt (I) aufgebauten, ortsfesten Station (1) mit einer Empfangs-, Sendeeinheit (1a, 1b) und einer oder mehreren in einer im Teilstreckenabschnitt begrenzten Zone (2) befindlichen beweglichen Stationen (3), die mit einem Empfänger ausgerüstet sind, wobei die Sendeantenne der ortsfesten Station (1) durch ein längs der begrenzten Zone verlegtes strahlendes Leckkabel (4) gebildet ist, dessen Innen- und Außenleiter auf der einen Seite an die Sendeeinheit der ortsfesten Station angekoppelt und auf der anderen Seite mittels eines ohmschen Widerstandes abgeschlossen sind, dadurch gekennzeichnet, daß der Widerstand durch mindestens eine Richtantenne (5) ersetzt ist, deren Hauptstrahlrichtung entgegengesetzt zur Richtung des im Leckkabel übermittelten Signals (6) verläuft.

2. Funkübertragungsanlage nach Anspruch 1, dadurch gekennzeichnet, daß die Antenne (5) in ihrem innerhalb der begrenzten Zone (2) ein die lokale Information enthaltendes Funkfeld aufbaut, dessen Feldstärke größer ist als das vom Leckkabel (4) im selben Bereich des Leckkabelendes aufgebaute Funkfeld.

3. Funkübertragungsanlage nach Ansprüche 1 oder 2, dadurch gekennzeichnet, daß am Kabelende die gesamte restliche von der Sendeeinheit gelieferte Energie über die Antenne (5) abgestrahlt wird.

4. Funkübertragungsanlage nach einem der Ansprüche 1 bis 3, dadurch gekennzeichnet, daß der Antenne (5) ein Dämpfungsglied (7) vorgeschaltet ist.

5. Funkübertragungsanlage nach einem der Ansprüche 1 bis 4, dadurch gekennzeichnet, daß die Antenne (5) in Form einer Yagi-Antenne ausgebildet ist.

6. Funkübertragungsanlage nach einem der Ansprüche 1 bis 5, dadurch gekennzeichnet, daß die Antenne (5) vertikal polarisierte Wellen abstrahlt.

7. Funkübertragungsanlage nach einem der Ansprüche 1 bis 6, dadurch gekennzeichnet, daß in benachbarten Teilstreckenabschnitten innerhalb eines Streckenabschnittes die Reihenfolge der Anordnung von Empfangs-/Sendeeinheit, sendeseitiger Anschluß des Leckkabels und am Leckkabelende angeschlossene Antenne längs der Teilstreckenabschnitte gleich ist.

8. Funkübertragungsanlage nach Anspruch 7, dadurch gekennzeichnet, daß die Reihenfolge der Anordnung in den benachbarten Teilstreckenabschnitten invers zueinander sind, so daß die Richtung des im Leckkabel übermittelten Signals in einem Teilstreckenabschnitt entgegengesetzt verläuft zur Signalrichtung im benachbarten Teilstreckenabschnitt.

9. Funkübertragungsanlage nach einem der Ansprüche 1 bis 8, dadurch gekennzeichnet, daß der sendeseitige Ausgang der Empfangs-/Sendeeinheit über einen 3-dB-Koppler (8) an zwei längs des Teilstreckenabschnittes in entgegengesetzter Richtung verlegten Leckkabeln angeschlossen ist und deren Leckkabelenden mit Antennen abgeschlossen sind.

10. Funkübertragungsanlage nach Anspruch 9, dadurch gekennzeichnet, daß ein Leckkabelende eines Teilstreckenabschnittes anstelle einer Antenne (5) mittels eines ohmschen Widerstandes abgeschlossen ist, und daß im benachbarten Teilstreckenabschnitt das benachbarte Leckkabelende mit einer Antenne abgeschlossen ist.

11. Funkübertragungsanlage nach einem der Ansprüche 1 bis 10, dadurch gekennzeichnet, daß am sendeseitigen Ausgang der Empfangs-/Sendeeinheit mehrere Leckkabel verschiedener Teilstreckenabschnitte und verschiedener sich kreuzender Streckenabschnitte angeschlossen sind.

**Claims**

1. Radio transmission system for the transmission of like or different local information data on equal or nearly equal carrier frequency for each information channel within a path portion consisting of several path portions between a respective locally fixed station (1) with a reception-transmission unit (1a, 1b) erected in each partial path portion (I) and one or more mobile stations (3), which are equipped with a receiver and disposed in a bounded zone (2) in the partial path portion, wherein the receiving aerial of the locally fixed station (1) is formed by a radiating leaky cable (3), which is laid along the bounded zone and the inner and outer conductors of which are at the one end coupled to the transmitting unit of the locally fixed station and at the other end termineted by means of an ohmic resistance, characterised thereby, that the ohmic resistance is replaced by at least one directional aerial (5), the principal direction of radiation of which extends oppositely to the direction of the signal (6) transmitted in the leaky cable.

2. Radio transmission system according to claim 1, characterised thereby, that the aerial (5) within its bounded zone (2) builds up a radio field which contains the local information data and the field strength of which is greater than that of the radio field built up by the leaky cable (4) in the same region of the end of the leaky cable.

3. Radio transmission system according to claims 1 or 2, characterised thereby, that the entire residual energy supplied by the end of the leaky cable is radiated at the cable end by way of the aerial (5).

4. Radio transmission system according to one of the claims 1 to 5, characterised thereby, that an attenuating member (7) is connected in front of the aerial (5).

5. Radio transmission system according to one of the claims 1 to 4, characterised thereby, that the aerial (5) is constructed in the form of a Yagi aerial.

6. Radio transmission system according to one of the claims 1 to 5, characterised thereby, that the areal (5) radiates vertically polarised waves.

7. Radio transmission system according to one of the claims 1 to 6, characterised thereby, that in neighbouring partial path portions within a path portion, the sequence of the arrangement of reception-transmission unit, transmitting end connection of the leaky cable and aerial connected to the end of the leaky cable is the same along the partial path portions.

8. Radio transmission system according to claim 7, characterised thereby, that the sequence of the arrangement in the neighbouring partial path portions is inverse one to the other so that the direction of the signal transmitted in the leaky cable in one partial path portion extends oppositely to the direction of the signal in the neighbouring partial path portion.

9. Radio transmission system according to one of the claims 1 to 8, characterised thereby, that the transmitting end output of the reception-transmission unit is connected by way of a 3 dB coupler (8) to two leaky cables laid in opposite direction along the partial path portion and their leaky cable ends are terminated by aerials.

10. Radio transmission system according to claim 9, characterised thereby, that one end of a leaky cable of a partial path portion is terminated by means of an ohmic resistance in place of an aerial (5) and the end of the leaky cable in the neighbouring partial path portion is terminated by an aerial.

11. Radio transmission system according to one of the claims 1 to 10, characterised thereby, that several leaky cables of different partial path portions and different, mutually crossing path portions are connected to the transmitting end output of the reception-transmission unit.

**Revendications**

1. Installation de radiocommunication pour la transmission d'informations locales identiques ou différentes à une fréquence porteuse égale ou sensiblement égale par canal d'information sur une section comprenant plusieurs tronçons, entre une station fixe (1), installée sur un tronçon (I) et comprenant une unité de réception et une unité d'émission (1a, 1b), et une ou plusieurs stations mobiles (3) se trouvant dans une zone (2) limitée sur le tronçon et équipées d'un récepteur, l'antenne d'émission de la station fixe (1) étant constituée par un câble à fuites (4) rayonnant, posé le long de la zone limitée et dont les conducteurs intérieur et extérieur sont couplés d'un côté à l'unité d'émission de la station fixe et bouclés de l'autre côté par une résistance pure, ladite installation étant caractérisée en ce que la résistance est remplacée par au moins une antenne directive (5), dont le sens de rayonnement principal est opposé au sens du signal (6) transmis dans le câble à fuites.

2. Installation de radiocommunication selon revendication 1, caractérisée en ce que l'antenne (5) produit dans la zone limitée (2) un champ radioélectrique contenant l'information locale et dont l'intensité est supérieure à celle du champ radioélectrique produit par le câble à fuites (4) dans la même zone de son extrémité.

3. Installation de radiocommunication selon une des revendications 1 ou 2, caractérisée en ce qu'à l'extrémité du câble, toute l'énergie résiduelle délivrée par l'unité d'émission est rayonnée par l'antenne (5).

4. Installation de radiocommunication selon une quelconque des revendications 1 à 3, caractérisée par le branchement d'un atténuateur (7) en amont de l'antenne (5).

5. Installation de radiocommunication selon une quelconque des revendications 1 à 4, caractérisée en ce que l'antenne (5) est réalisée sous forme d'une antenne Yagi.

6. Installation de radiocommunication selon une quelconque des revendications 1 à 5, caractérisée en ce que l'antenne (5) rayonne des ondes polarisées verticalement.

7. Installation de radiocommunication selon une quelconque des revendications 1 à 6, caractérisée en ce que la séquence de montage de l'unité de réception-émission, du raccordement du câble à fuites au côté émission et de l'antenne raccordée à l'extrémité du câble à fuites est la même le long des tronçons voisins d'une section.

8. Installation de radiocommunication selon revendication 7, caractérisée en ce que la séquence de montage est inversée dans les tronçons voisins, de sorte que le sens du signal transmis par le câble à fuites sur un tronçon est opposé au sens du signal sur les tronçons voisins.

9. Installation de radiocommunication selon une quelconque des revendications 1 à 8, caractérisée en ce que la sortie d'émission de l'unité de'réception-émission est reliée par un coupleur 3 dB (8) à deux câbles à fuites posés en sens inverse le long du tronçon et dont les extrémités sont bouclées par des antennes.

10. Installation de radiocommunication selon revendication 9, caractérisée en ce qu'une extrémité de câble à fuites d'un tronçon est bouclée par une résistance pure au lieu d'une antenne (5); et sur le tronçon voisin, l'extrémité voisine de câble à fuites est bouclée par une antenne.

11. Installation de radiocommunication selon une quelconque des revendications 1 à 10, caractérisée en ce que plusieurs câbles à fuites de divers tronçons et de diverses sections en intersection sont raccordés à la sortie d'émission de l'unité de réception-émission.

Teilstreckenabschnitt

FIG. 1

Teilstreckenabschnitt I

Teilstreckenabschnitt II

FIG. 2